# EUROPEAN PATENT APPLICATION

(11) **EP 1 914 677 A1**
(43) Date of publication of application: **23.04.2008**
(21) Application number: 06122479.6
(22) Date of filing: 17.10.2006
(51) Int. Cl.: G06Q 30/00

(54) **System for location-based intelligent matchmaking using moble access devices**

(71) Applicant: Ertemel, Adnan Veysel, 34164 Istanbul (TR)
(72) Inventor: Ertemel, Adnan Veysel, 34164 Istanbul (TR)
(74) Representative: Sevinç, Erkan

(57) **Abstract**

The system of the present invention compares users' profiles and preferences in addition to actual location coordinates in background. It makes effective use of location server in that first, the location coordinates and timestamp is stored in local database. If last location check of a queried user is within a specified period, location server is not queried again and last location is re-used with the assumption that the user cannot go far away from where he was in minutes ago. Second, the location check period is changed dynamically according to user's current moving pattern: if he stays at the same location (i.e. office, home) for an extended period, the location check period is increased. Third, location checking frequency is also affected by how frequently the user is matched as a potential candidate. Conversely, if a user is not matched as a candidate at all, his location is never checked thus reducing amount of transactions to location server and saving from network's limited resources. Finally, if the user is currently online but not available (i.e. busy, in a meeting), he is not included in matchmaking and location querying process again saving from network's limited resources.

## Description

### Technical Field of the Invention

The invention relates to a system for integration of internet based computerized dating services with mobile access devices and location based services. More particularly it relates to a method, system and apparatus for mobilizing web based online dating concept by adding time-critical and location-aware nature of wireless technologies to the picture.

### Background of the Invention

Although requiring more inter-disciplinary research in order for understanding dynamics of socio-technical change in the current field, an outstanding demand for matchmaking services rises in modern societies. One theory could explain this by referring to increasing individualism triggered by technological change. Whatever the causes are, modern societies are in need of "social spaces" to enable communication and technology appears to be playing a prominent role in bridging this gap as well.

There are quite a lot of web based online dating systems. Those systems enable subscribers to enter their in-depth personal profile information, leave their pictures and specify their preferred match's attributes also in detail. When the system finds compatible matches, it notifies both parties via email.

Web based online dating has the disadvantage that it is pre-organized, requires stressful preparation and pre-planning and loses the element of spontaneity important to successful relationship building.

Some traditional web based online dating systems include local perspective by way of asking attributes such as local zip code and making location driven searches using the same. This perspective, however, lacks real-time location coordinates of user and time-sensitive nature that instantly notifies a match at the current time and place in real world.

Additionally, there are Bluetooth-based real-time and location-aware online matchmaking services. Those systems identify compatible matches only within a very short geographical range (10-20 meters). That is, there is no central database that compares all users actively in the pool. In addition, successful operation of such systems requires both parties to make Bluetooth communication active, which is not always the case.

According to the system disclosed in US5963951 on the other hand, subscribers are required to create a user profile and a search profile. After creating profiles, the system continuously searches for a match among other subscribers. A certain percentage of criteria need to be satisfied in order for a match to be found. In this system, location is entered by the user by specifying country, city, and suburb. In order for successful matches to be found, some percentage of the criteria must be satisfied. But if there are not enough search results after a number of searches, system decrease percentage in order to find more matches. This service does not have mobility features and since location is entered by the user manually, location data is relatively static. The system according to the present invention requires mutual match in order to provide successful matchmaking.

According to another approach for providing a matchmaking service, a given subscriber needs to create his/her profile on a web portal and downloads a mobile client to his/her mobile phone. On this client, subscriber can search for other users by entering some criteria (also distance criteria). After finding a match, subscribers can chat with each other via this client. According to the present system however, users do not have to install a client in order to use the service. The system herein supports mutual matching and searching does not occur manually since the system runs search profile on background and if a match is found, user is notified asynchronously. Also, since the system according to the present invention is built on top of industry standard "IMPS"(Instant Messaging and Presence Service), even native phone users which have built-on support for IMPS can use the present system.

According to the system disclosed in GB2388493, subscribers enter demographic and personal partner preferences. Then if there are matches present in that location, match list will be downloaded to user's mobile device. And users may communicate through different communication channels.

The present invention provides further value add to matchmaking concept by incorporating location-aware and time-sensitive aspects of mobility to the whole process. As opposed to web based online dating services where users explicitly request a search to be made etc. when they want, they are connected and online anywhere at anytime in mobile world. This implies that a rather different perspective could be taken in mobile dating. An agent that acts on behalf of the user is run periodically in background which compares the user's profile and preferences against other online & active users in central pool of the service. When a compatible mutual match is found, the system pushes the notification to the user asynchronously.

For a dating service to be effective in pinpointing an ideal match against many detailed criteria there should be as many candidates as possible. As opposed to systems that compare profiles of singles within a certain range (like in Bluetooth), the present invention gathers all active & available users' profiles in a single central pool. As such, the chances that an ideal match could be found is increased.

Location query is a costly operation on mobile operator's side. This is because it consumes from wireless network's limited resources, it takes relatively long time (in several seconds) to locate a user and finally because operator or application service provider potentially pays for location query transactions that are made through Location Server. In view of this limitation, the invention makes effective use of location server.

In providing location coordinates, the invention benefits from advantages of various location determination technologies. GSM and the like technologies enable determining location of all users with a mobile phone (Location Based Services). However, in this traditional location based services, the accuracy is low (with ranges about 400 to 500 meters). On the other hand, GPS-like technologies enable very accurate (several meters) location determination using satellite systems. The drawbacks of GPS-like technologies are that they require a GPS receiver on mobile device and they do not work within buildings. The present invention gathers location coordinates from different location determination sources including both GSM and GPS systems and consolidate the information as an input to the matchmaking process.

The system according to the present invention requires occurrence of match when a certain percentage of criteria is satisfied. It also requires mutual match. There is no need for predefined locations, since it automatically query location and calculate subscribers' relative distance to each other.

The present invention provides a system that sense presence of a subscriber near to another subscriber with mutual interests (i.e. dating, selling/getting concert tickets outside a concert hall), or another point of interest (POI) that belongs to a third party/provider (a specified bookstore, a coffee house etc).

### Objects of the Invention

The primary object of the present invention is to provide a location-aware and time-sensitive spontaneous matchmaking system that is able to sense when a subscriber is near to another subscriber with mutual interests such as dating, or another point of interest (POI) that belongs to a third party/provider such as a bookstore.

Another object of the present invention is to provide a location-aware and time-sensitive spontaneous matchmaking system which is not pre-organized which does not necessitate preparation and pre-planning.

Another object of the present invention is to provide a location-aware and time-sensitive spontaneous matchmaking system providing a user with real-time time-sensitive location coordinates of a target user.

Another object of the present invention is to provide a location-aware and time-sensitive spontaneous matchmaking system identifying compatible matches within any location accessible by a GPS or GSM network.

Another object of the present invention is to provide a location-aware and time-sensitive spontaneous matchmaking system which does not require a user to use special communication protocols such as Bluetooth.

Another object of the present invention is to provide a location-aware and time-sensitive spontaneous matchmaking system requiring mutual match in order to provide successful matchmaking.

Another object of the present invention is to provide a location-aware and time-sensitive spontaneous matchmaking system in which users do not have to install a client in order to use the service.

Another object of the present invention is to provide a location-aware and time-sensitive spontaneous matchmaking system which enables mobile users to know their locations in advance.

### Summary of the Invention

The present invention provides a push based location based online dating service based on an integration of wireless technologies (GSM, GPS etc.), mobile access devices (cellular, PDA etc.) and back-end matchmaking services. The system intelligently compares users' profiles and ideal preferences in addition to actual location coordinates in background. Only when a mutual match is found the system asynchronously notifies both parties instantly via their mobile devices.

The invention makes effective use of location server. First, the location coordinates and timestamp is stored in local database. If last location check of a queried user is within a specified period, location server is not queried again and last location is reused with the assumption that the user cannot go far away from where he was in minutes ago. Second, the location check period is changed dynamically according to user's current moving pattern using data mining techniques: if he stays at the same location (i.e. office, home) for an extended period, the location check period is increased. Third, location checking frequency is also affected by how frequently the user is matched as a potential candidate. Conversely, if a user is not matched as a candidate at all, his location is never checked thus reducing amount of transactions to location server and saving from network's limited resources. Finally, if the user is currently online but not available (i.e. busy, in a meeting), he is not included in matchmaking and location querying process again saving from network's limited resources.

### Brief Description of the Figures

Accompanying drawing is given solely for the purpose of exemplifying a system for providing time and location sensitive spontaneous communication whose advantages over prior art were outlined above and will be explained in detail hereinafter:

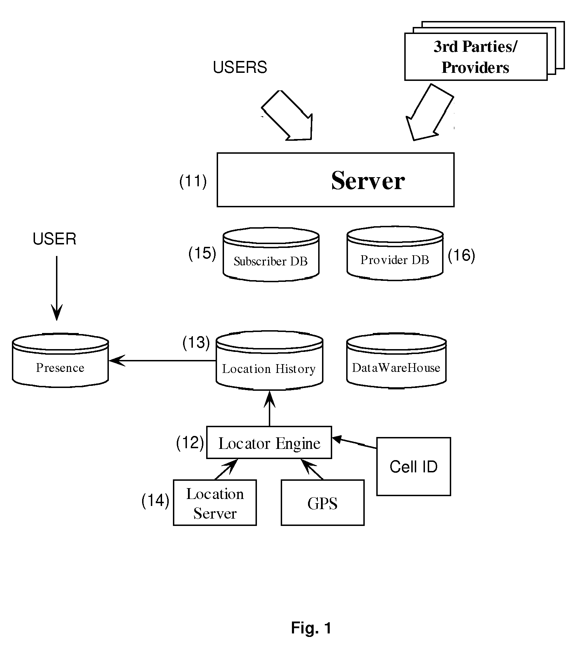

Fig. 1 demonstrates general architecture of the system according to the present invention.

### Detailed Description of the Invention

The operation of the system according to the present invention primarily proceeds in conformity with the following sequence. Users pre-register their demographics and personal partner preferences via one or more of available access channels, preferably a web interface. In this step, they complete their self-described characteristics and the characteristics of those they were interested to meet (age, sex, ethnicity, height/weight, interests etc) in an in-depth format. Optionally, they can leave their picture for viewing by others. As a last step, they define a percentage value which is the threshold for notification of potential ideal matches. This threshold cannot be below a certain value and may also be determined once in the system without leaving the option to the users. If required, a program would be downloaded or minor changes made to their phone configuration to permit interaction with the service.

Once the registration is complete, users can activate their searches by using a combination of current mobile technologies: A back office server and systems using SMS, voice recognition, WAP Phone, J2ME application, cell ID, Symbian application, embedded IMPS (Instant Messaging and Presence Service) client, PDA on-line and/or mobile WWW services.

Once they activate their search, the users are put to active user pool in a server (11). The server (11) constantly compares all users in active user pool against each other and calculates match percentage. In case that percentage is equal to or greater than the threshold set for that user, it makes the converse check to see if the user is an ideal match candidate for the other party according to other party's preferences and percentage threshold. A percentage value entered by the user could not be changed by the system in order to find more matches. Only if a mutual match occurs and the actual locations of both parties are within a specified geographical zone, the system asynchronously notifies both parties of an ideal match. Both parties see the profile and if present, picture of the other party via their mobile device and are asked by the system to accept the other party for communication (i.e. add to contact list). From that point on, the parties are on their own; they can contact further and meet if they wish.

Since the service is always run in background without users' direct request and users always carry their mobile devices with themselves, it is not desirable to receive such messages in many circumstances (i.e. at the office, in a meeting, when busy). To avoid such situations, the system incorporates current mobile presence and availability information (busy, do not disturb, idle etc.) of user wherever possible using emerging mobile technologies like Instant Messaging and Presence Service (IMPS) in addition to users being currently online.

Again, since the service is always running in background, it has a potential to be an intrusion/disturbance factor when unwanted matches are notified frequently. To avoid such circumstances, although a user, say party A's ideal match preferences comply with another party B's profile, party A's profile may not necessarily match party B's ideal match preferences. If this is the case, the system takes no action and doesn't notify either party. It is only when both parties' profile matches to other parties' preferences as a percentage value equal to or more than a specified threshold that both parties are asynchronously notified.

The system architecture will be explained hereinafter. As shown in the figure I, the present system interacts with mobile subscribers and location based service third parties. Within the system, there are various components. The system aims at learning subscribers' long-term geographic movements patterns and based on past statistical data, once the subscriber comes to a specific location (i.e. home) predicting for how long the user will stay there and where he is about to be heading next. This information is used in two distinct areas. It is first used in location query, which is a costly operation for GSM operator. Query frequency could be optimized based on intelligent guesses about user's movement patterns. And second, in determining user's presence value, which could be updated based on learned information. For instance, if the user is geographically at home or office, current presence information could be set so without user having to explicitly set that value. Or movement speed could be checked to see if he is driving etc. Presence information is important in that it provides significant value to third parties. It therefore gives an invaluable information to third parties about the location context (office, lunch, home) and possibly activity based context (driving etc.) of the subscriber.

The locator engine (12) according to the present invention constantly provides location data as input to a location history database component (13). In doing so, said locator engine (12) uses pros and cons of a location server in GSM and GPS technologies: GPS has greater accuracy and has no cost concerns. But GPS doesn't operate indoor. Also, GPS is not present for all subscribers. Using both technologies together, said locator engine (12) makes efficient location querying with optimum location query frequency. It uses its own local cache to avoid having to make repeated queries of the same subscriber in a short time.

The system evaluates subscriber's current presence (at home, online, in a meeting, driving etc.), interest categories, time of day, permitted brands, past service usage history to see whether subscriber is open to such a match and if so sends third parties an asynchronous callback (with X/Y coordinates and user identifier) to let them send a completely personalized offer to the subscriber at the very relevant place (near to their shop), at the very relevant time (time of day) and with a personalized offer. This way, improved value is delivered to subscribers. In addition, providers do no longer have to continuously poll their subscribers' location coordinates.

Upon creation of profile information by a user, i.e. in-depth attributes about his/her physical appearance, habits, lifestyle etc. in the case of dating and interest categories and optionally a list of brand names in the case of a point of interest (POI) third party/provider such as a bookstore and upon entering of information by third parties about their branches including, human readable address, telephone number, geographic X, Y coordinates, said locator engine (12) makes periodic location updates of online/active subscribers in the subscriber pool. This happens by using a location server (14) and GPS technologies in combination. Based on subscriber's long-term movement patterns, the system makes some intelligent guesses about how long the user will stay, provided that the location entered is a well-known location (i.e. his home, office). For instance, if a user had been staying at a single working place till about a given hour about %90 percent in weekdays, the system adjusts location query frequency for that subscriber accordingly.

If the subscriber has entered a geographic area which is already known by the system (i.e. home), the system mirrors this learned information to the subscriber's presence status. So, just like the case in instant messaging technologies, other permitted subscribers who have added the subject subscriber to their contact list can see the subscriber's current status. This information also becomes accessible to other services that user has opted-in.

Having the knowledge of subscriber's attributes, demographic information, past service usage history, past movement history and presence information, the server (11) according to the present invention checks to see if someone else or a POI which might be of interest is nearby to subscriber's current location. If so, it makes asynchronous notification of the case. If someone else is matched, it notifies both parties simultaneously. If matched entity is a point of interest, which should always be a brand/category that subscriber had explicitly opted in, the system generates a callback program call to a reference passing, subscriber's ID and X/Y coordinates (or POI id to which subscriber is nearby). Thus, third party is able to check in its internal database the subscriber's past history/its class (premium user etc.)/demographic information etc. and make a completely personalized offer and with a where and when combination. The system forwards third party's offer to the subscriber on his mobile.

Accordingly, the present invention proposes a system for providing time and location sensitive spontaneous communication between mobile subscribers and mobile and stationary subscribers of a mobile communication network, comprising a central server (11) associated with a subscriber database (15) storing information with regard to subscriber specific data, a third party provider database (16) storing information with regard to provider specific data and a location history database (13) storing information with regard to subscribers' location history. Said central server (11) runs an algorithm for processing location information of mobile and stationary users received periodically from a locator engine (12). Said locator engine (12) comprises communication means for periodically retrieving mobile and stationary subscribers' location information from GSM and GPS networks associated with mobile network service providers and additional communication means for submitting said location information to said central server (11). Said central server (11) also comprises a processing unit associated with a storage medium through which subscribers' long-term movement patterns are stored and processed to modify location query frequency.

On the other hand, the method for providing time and location sensitive spontaneous communication between mobile subscribers and mobile and stationary subscribers of a mobile communication network comprises the steps of a) making periodic location updates of users in a subscriber pool, b) determining relative physical distance of users in a specific category and relative physical distance of users to third party stationary users in a specific category and c) making notification to separate parties in a specific category within the same geographic area.

## Claims

1. A method for providing time and location sensitive spontaneous communication between mobile subscribers and mobile and stationary subscribers of a mobile communication network comprising the steps of a) making periodic location updates of users in a subscriber pool, b) determining relative physical distance of users in a specific category and relative physical distance of users to third party stationary users in a specific category and c) making notification to separate parties in a specific category within the same geographic area.

2. The method according to Claim 1 wherein the step of making periodic location updates of users in a subscriber pool comprises the steps of a) storing subscribers' time-sensitive location information a) determining subscribers' long-term movement patterns, b) making approximations of a user's potential location based on long-term movement patterns and c) optimizing query frequency in view of long-term movement patterns, d) increasing query frequency dynamically if movement patterns obtained in step c) do not apply to the current movement pattern of a user.

3. The method according to Claim 2 wherein the step of optimizing query frequency in view of long-term movement patterns comprises the steps of a) calculating period of time as from last location check of a user c) comparing the value obtained in step b) with a pre-determined value and c) making location update if said pre-determined value is greater than the value obtained in step b).

4. The method according to Claim 1 wherein the step of determining relative physical distance of users in a specific category and relative physical distance of users to third party stationary users in a specific category comprises the steps of a) checking subscribers' attributes, demographic information, past service usage history and availability information and b) calculating match percentage of separate parties.

5. The method according to Claim 1 and 4 wherein the step of making notification to separate parties in a specific category within the same geographic area comprises the steps of a) checking presence of mutual match, b) asking permission from both parties for communication and c) sending profile information of the other party upon approval of both parties, in the case separate parties are movable users.

6. The method according to Claim 1 and 5 wherein the step of making notification to separate parties in a specific category within the same geographic area comprises the steps of a) providing matched movable users with matched providers' specific information and b) providing matched stationary users with users' specific information, in the case separate parties are movable users and stationary users.

7. The method according to Claim 1 and 4 wherein match percentage is an input in determining location query frequency of a user.

8. The method according to Claim 6 wherein user specific information comprises attributes information, demographic information and location information.

9. The method according to Claim 6 wherein user specific information comprises past service usage history and location information.

10. A system for providing time and location sensitive spontaneous communication between mobile subscribers and mobile and stationary subscribers of a mobile communication network comprising a central server (11) associated with a subscriber database (15) storing information with regard to subscriber specific data, a third party provider database (16) storing information with regard to provider specific data and a location history database (13) storing information with regard to subscribers' location history, said central server (11) running an algorithm for processing location information of mobile and stationary users received periodically from a locator engine (12) **characterized in that**;
said locator engine (12) comprises communication means for periodically retrieving mobile and stationary subscribers' location information from GSM and GPS networks associated with mobile network service providers and additional communication means for submitting said location information to said central server (11),
said central server (11) comprises a processing unit associated with a storage medium through which subscribers' long-term movement patterns are stored and processed to modify location query frequency.

11. A system according to Claim 10 wherein said locator engine (12) is connected to GSM network by means of a location server (14) of a mobile operator.

12. A system according to Claim 10 wherein connection between subscribers and said server (11) is established through SMS, voice recognition, WAP Phone, J2ME application, Symbian application, embedded IMPS client, cell ID and mobile WWW services.
